Europäisches Patentamt

European Patent Office

Office européen des brevets

(11) Publication number: **0 288 105**
**A2**

## EUROPEAN PATENT APPLICATION

(21) Application number: 88200651.3

(22) Date of filing: 06.04.88

(51) Int. Cl.⁴ **B01D 29/30** , **B30B 9/14**

(30) Priority: 24.04.87 IT 4683387

(43) Date of publication of application:
26.10.88 Bulletin 88/43

(84) Designated Contracting States:
AT BE CH DE ES FR GB GR IT LI LU NL SE

(71) Applicant: **DIEMME S.P.A.**
**1, Via Bedazzo**
**I-48022 Lugo Ravenna(IT)**

(72) Inventor: **Melandri, Primo**
**1, Via Bedazzo**
**I-48022 Lugo (Ravenna)(IT)**
Inventor: **Melandri, Francesco**
**1, Via Bedazzo**
**I-48022 Lugo (Ravenna)(IT)**

(74) Representative: **Corradini, Corrado**
**4, Via Dante Alighieri**
**I-42100 Reggio Emilia(IT)**

(54) Machine for continuously separating solid and semisolid parts from liquid, in the purification of civil and industrial effluents.

(57) The machine comprises a separation chamber (1) defined by a filtering surface (11) the lower part of which is cylindrical and the upper part of which is open in the manner of a hopper; it also comprises a cylindrical separation and compacting chamber (2); within the chambers (1) and (2) there is positioned a screw the helix of which has a radius substantially equal to the radius of the chambers (1) and (2); said screw (30) is arranged to transfer the solid and semisolid parts from the first to the second chamber and from there to discharge; on the upstream end of the chamber (2) there is positioned a door (22) arranged to oppose with constant force the material advancement.

Fig. 1.

# MACHINE FOR CONTINUOUSLY SEPARATING SOLID AND SEMISOLID PARTS FROM LIQUID, IN THE PURIFICATION OF CIVIL AND INDUSTRIAL EFFLUENTS.

This invention relates to a machine for continuously separating solid and semisolid parts from liquid in the purification of civil and industrial effluents.

In the purification of effluents, in particular sewage, it is often necessary to subject such effluent to initial treatment for separating the solid and semisolid parts from the liquid, which is subsequently purified. This is because an active sludge installation, when subjected to a high organic load, can undergo considerable overload to the extent of compromising its operability. In addition the presence of inorganic residues and often also stones can lead to blockage and fracture of the water purification lines.

The present invention is particularly suitable for use in purification plants serving residential centres in which if an extensive centralised sewer system which directly conveys the effluent to the purification plant is not provided, the sewage is generally withdrawn from septic tanks, cesspools, sewage manifolds, industrial residue collection pits etc. by road tankers and then transported to the purification plant. Such effluent normally comprises coarse material such as rags, stone, sand, plastics, and other semisolid substances such as fats, phosphorus etc.

In the purification plant, said coarse parts and said semisolid substances are currently separated from the liquid by tanks provided with a system of static self-cleaning grids. In these tanks, whereas the more liquid parts flow downstream, the solid and semisolid parts remain on the base of the tank and from here they are periodically removed by suitable mechanical shovels. These separated parts are then heaped on dumps.

All this obviously involves considerable use of plant, mechanical means and labour.

The object of the present invention is to obviate said drawbacks by a machine for separating solid and semisolid parts from liquid which operates effectively and completely automatically, ie without the need for periodical intervention in order to remove the separated parts.

Said object is attained by the machine as characterised in the claims. Besides separating the solid and semisolid parts, the machine also compacts and squeezes these separated parts, so reducing their volume and facilitating their subsequent stowage and transportation.

In addition to its use in treating sewage and industrial effluent, the machine of the invention can also be used for separating organic residues and fruits and vegetables from wash water in the food industry, for separating and recovering plastics material in flakes or granules from aqueous carriers and in the tanning industry for removing the solid pieces of flesh originating from the fleshing stage.

The invention is clarified in detail hereinafter with the aid of the accompanying figures which show a non-exclusive embodiment thereof.

Figure 1 is a section through the machine on an axial vertical plane.

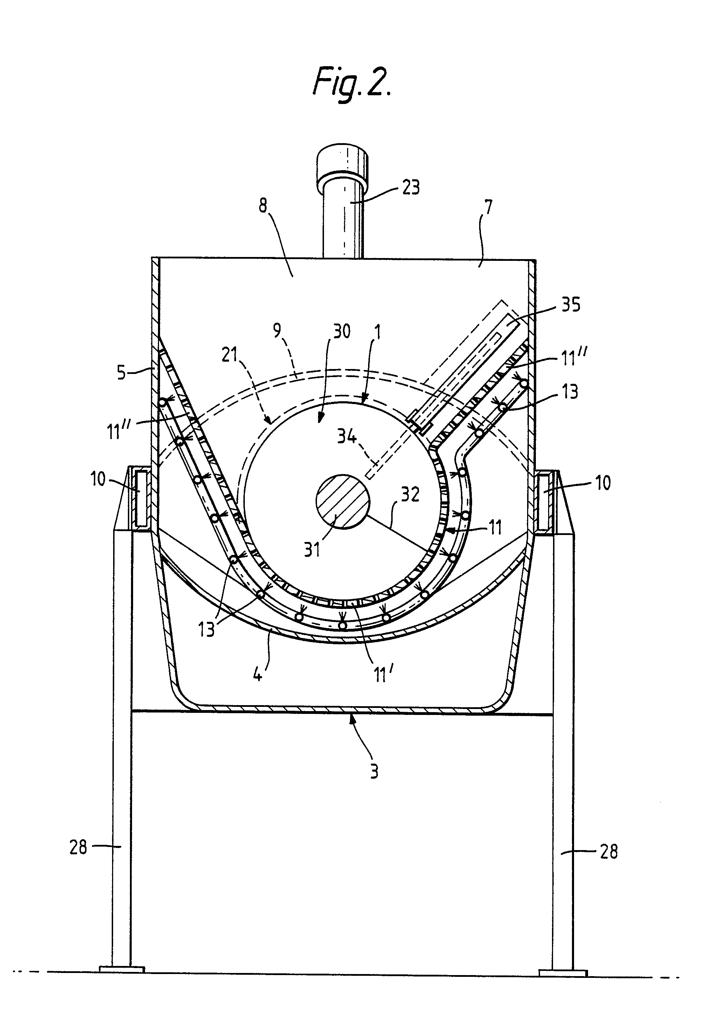

Figure 2 is a section on the line II-II of Figure 1.

The machine according to the invention comprises a first separation chamber 1 defined by a perforated filtering surface 11 the lower part 11' of which is cylindrical and the upper part of which is open in the manner of a hopper. Specifically, the lower part 11' continues in an upward direction in the form of two diverging flat walls 11".

The whole surface 11 is provided with numerous holes, for example of diameter 2.5 mm, regularly distributed over its entire area so as to allow the more liquid part to pass but to retain the more solid and semisolid part of the treated effluent.

A second separation and compacting chamber 2 is also provided defined by a perforated filtering surface 21. The chamber 2 is coaxial and adjacent to the cylindrical part of the first chamber 1 and communicates therewith.

In practice, the cylindrical part 11' of the chamber 1 is joined without discontinuity to the lower part of the surface 21 of the chamber 2.

The entire surface 21 is also provided with numerous perforations, in particular equal to the holes in said surface 11 and equally distributed over the entire surface to enable the more liquid part to pass and retain the more solid and semisolid part.

Alternatively, the shape and size of the holes can vary according to their location in the two chambers and the type of effluent to be treated.

Below the chamber 12 there is a vessel 3 for collecting the filtrate from said chambers. Below the chamber 2 there is a channel 4 which conveys the filtrate from the chamber 2 into the vessel 3. Two vertical side walls 5 joined to the upper side edges of the vessel 3 laterally enclose the surface 11 to upperly define an open mouth 8 which is connected to the walls 11" in order to define a wide hopper. An end wall 6 positioned upstream and joined to an upper edge of the vessel 3 closes the upstream end of the chamber 1 and mouth 8.

A second end wall 7 positioned more upstream and joined to an upper edge of the vessel 3 closes that region of the chamber 1 which does not communicate with the chamber 2, and also closes the upstream end of the mouth 8.

The chamber 2 is closed upperly by a curved wall 9. To the side of the chambers 1 and 2 there extend two longitudinal support members 10 which support the vessel 3, the channel 4, the walls 5, 6 and 7 and the curved wall 9. The filtering surface 11 is supported by being fixed to the side walls 5.

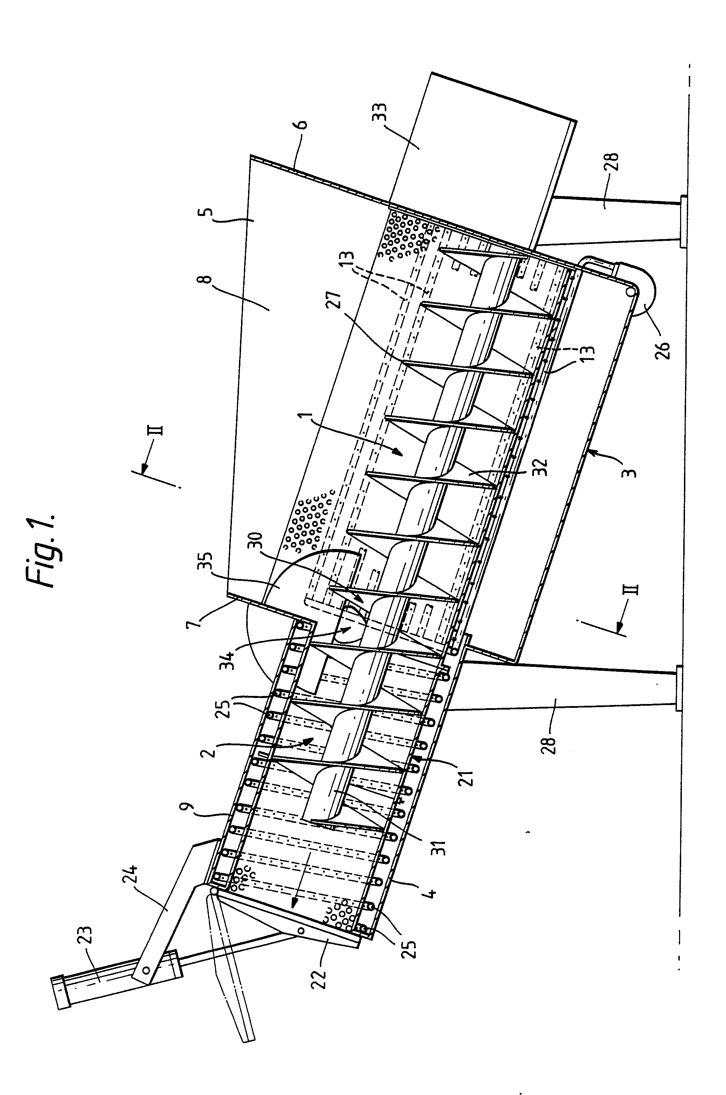

Within the chambers 1 and 2 there is positioned a screw 30 consisting of a shaft 31 about which a continuous helix 32 is wound. The shaft 31 is coaxial to the axis of the chambers 1 and 2 and the radius of the helix 32 is substantially equal to the radius of the chamber 2 and to the radius of the chamber 1 (specifically to the radius of the cylindrical part thereof). The length of the helix is such that it extends along the entire chamber 1 and part of the chamber 2. The screw 30 rotates in the direction required to transfer the separated solid and semisolid parts from the first to the second chamber and from here to discharge. The shaft 31 is cantilever-supported by suitable bearings (not shown) positioned on the upstream end and is driven by a drive unit 33 (shown diagrammatically in Figure 1) positioned on the outside of the wall 6.

I correspondence with the wall 7 there is provided a known rotary bladed device for facilitating the axial transfer of the material conveyed by the screw 30. This device comprises a plate 34 lying in an inclined plane passing through the axis of the screw 30, and in which there are defined a number of radial blades which become positioned, one at a time, in the space between two successive turns of the screw 32. The rotation of the screw 30 produces a corresponding rotation of the plate 34 and this at the same time intercepts the transported material which rotates together with the screw, so compelling it to advance. Simultaneously, the plate 34 rotates and enters a narrow housing 35 within which its blades are scraped.

On the downstream end of the chamber 2 there is provided a door 22 hinged at its top on a horizontal axis. A hydraulic cylinder-piston unit 23 of substantially constant but adjustable pressure acts on the door 22.

The cylinder of the cylinder-piston unit 23 is hinged on a horizontal axis to a bracket 24 fixed to the wall 9, and the end of its rod is hinged to the door 22. Consequently, whatever its angular position the door 22 acts with a substantially constant force which opposes the advancement of the material leaving the chamber 2.

Within the machine there is provided a pipe system for washing the filter surfaces 11 and 21. This system comprises a first series of straight pipes 13 positioned a small distance apart parallel to the axis of the chamber 1. For example, the pipes 13 have an inner diameter of 30 mm and their axes are spaced apart by 200 mm. The pipes 132 are positioned outside the chamber 1 a short distance from the filtering surface 11. They are provided with numerous holes directed towards the surface 11 to emit small jets of water to cover substantially the entire surface 11. The system also comprises a second series of circular pipes 25 positioned a short distance apart. For example the inner diameter of the pipes 25 is 30 mm and the distance between their axes is 200 mm. The pipes 25 externally embrace the chamber 2 a short distance from the relative filtering surface 21. They are also provided with numerous holes directed towards the surface 21 to emit small jets of water covering substantially the entire surface 21. In practice, said pipes 25 can be in the form of a single pipe wound spirally in the form of numerous circular turns.

The two sets of pipes 13 and 25 are connected to a pump 26 which draws water from the collection vessel 3 or from a point in the purification plant more downstream (where the liquid is more pure) or from the water mains, and feeds it under pressure to said pipes.

Small brushes 27 which rub against the filtering surface 11 are fixed to the peripheral edge of the helix 32 in the chamber 1, and in particular on the upstream portion of this helix.

The machine is supported by four legs 28 fixed to the longitudinal members 10 and of adjustable length so as to vary the inclination of the axis of the chambers 1 and 2 between a horizontal position and a position inclined by about 30 degrees with the chamber 2 positioned higher than the chamber 1.

The effluent to be treated, transported for example by drainage tankers, is poured into the chamber 1 through the mouth 8.

Most of the separation occurs in the chamber 1 as the more liquid parts pass through its filtering surface 11 and fall directly into the collection vessel 3. In the chamber 1 the rotation of the screw 30 greatly facilitates the filtration through the surface 11 as it churns up the water and continuously removes the solid and semi-solid parts form the filtering surface 11, so keeping it free and clean for passage of the more liquid parts.

When the solid and semisolid parts conveyed by the screw 30 pass into the chamber 2, they here undergo a compacting action both by the resistance to their advancement produced by their weight and the friction between the relatively moving parts, and by the resistance produced by the door 22. Consequently, within the chamber 2 the separated solid and semisolid parts are pressed and lose their more liquid part which filters through the surface 21 and is conveyed into the vessel 3, and they finally leave compacted and dewatered (with a degree of dryness of about 60-80%).

The action of the door 22 is substantially constant. At the commencement of treatment the door 22 closes the chamber 2 so that against it there begins to form a more or less cylindrical mass of separated solid and semisolid material. When the compacting pressure of this mass exceeds the thrust produced by the door 22, this opens urged by the mass of escaping material, but continues to exert the required opposing action. By adjusting the thrust acting on the door 22 by means of the cylinder-piston unit 23, the degree of compacting and squeezing of the separated solid and semisolid parts can be controlled.

During machine operation, the pipes 13 and 25 emit jets of pressurised liquid, withdrawn from the vessel, against the filtering surfaces 11 and 21 so as to keep these clean and prevent clogging. The brushes 27 serve the same purpose, by cleaning the surface 11 during rotation of the screw.

There is therefore a continuous and effective separation action which enables high effluent throughputs to be treated by means of relatively small filtering surfaces.

In addition the separated solid and semisolid parts leave the machine drained, compacted and relatively dry, so facilitating the subsequent transportation and disposal of these separated parts.

Numerous modifications of a practical and applicational nature can obviously be made to the invention, but without leaving the scope of the inventive idea as claimed hereinafter.

## Claims

1. A machine for continuously separating solid and semisolid parts from liquid in the purification of civil and industrial effluents, characterised by comprising:
- a first separation chamber defined by a perforated filtering surface the lower part of which is cylindrical and the upper part of which is open in the manner of a hopper for the introduction of the effluent to be treated;
- a second separation and compacting chamber defined by a perforated filtering surface of cylindrical shape, said second chamber being coaxial and adjacent to the cylindrical part of the first chamber and communicating therewith;
- a lower collection vessel for the liquid which filters from said chambers;
- a screw rotated within said chambers and coaxial thereto, its helix having a radius substantially equal to the radius of the chambers and a length such as to extend along the entire first chamber and at least part of the second chamber, said screw being arranged to transfer the solid and semisolid parts from the first to the second chamber and from there to discharge:
- a door positioned on the upstream end of the second chamber and arranged to oppose with substantially constant force the advancement of the material which leaves the second chamber;
- a system of internal pipes for washing the filtering surfaces.

2. A machine as claimed in claim 1, characterised in that said system of wash tubes comprises:
- a first series of straight pipes positioned a short distance apart parallel to the axis of the first chamber and disposed external to the first chamber at a short distance from the relative filtering surface, said series of pipes being provided with numerous holes directed towards said filtering surface and arranged to emit small liquid jets covering the entire said filtering surface;
- a second series of circular pipes positioned a short distance apart and externally embracing the second chamber a short distance from the relative filtering surface, said series of pipes being provided with numerous holes directed towards said filtering surface and arranged to emit small liquid jets covering the entire said filtering surface;
- pumping means arranged to withdraw liquid from a collection vessel or from the water mains and to feed it under pressure into said series of pipes.

3. A machine as claimed in claim 1, characterised by comprising brushes distributed on the peripheral edge of the screw helix so as to rub against the filtering surface.

Fig.1.

Fig.2.